Europäisches Patentamt

European Patent Office

Office européen des brevets

(11) Publication number: **0 418 436 A1**

# EUROPEAN PATENT APPLICATION

(21) Application number: 89309470.6

(22) Date of filing: 19.09.89

(51) Int. Cl.⁵: **F16D 1/06**, F16H 7/20, B27B 17/08

(43) Date of publication of application:
27.03.91 Bulletin 91/13

(84) Designated Contracting States:
AT BE CH DE ES FR GB GR IT LI LU NL SE

(71) Applicant: BLOUNT, INC.
5550 S.W. Macadam Avenue
Portland Oregon 97201(US)

(72) Inventor: Calkins, Eugene E.
5870 River Road North
Salem Oregon 97303(US)
Inventor: Petrovich, Michael V.
8706 N.E. Russell Street
Portland Oregon 97220(US)

(74) Representative: Jones, Ian et al
POLLAK MERCER & TENCH High Holborn
House 52-54 High Holborn
London WC1V 6RY(GB)

(54) Sprocket assembly.

(57) A sprocket assembly (12) includes a sprocket adapter driven by the motor of a chain saw, the adapter having an adapter shaft (24) which has an inner opening to fit around the drive shaft (18) of the chain saw. A rim sprocket (28) is mounted on the adapter shaft (24), the shaft and the sprocket opening having mating cross-sectional shapes which maximize the engaging areas capable of transmitting turning forces. The cross-sectional shapes have flat or concave radially innermost portions between curved or pointed radially outermost portions (26,30). The radially innermost portions permit an optimum sizing of the sprocket to the saw chain with sufficient pocket depth between the sprocket teeth (36) to fully receive the drive tangs of the saw chain.

## SPROCKET ASSEMBLY

This invention relates to a sprocket assembly suited in particular to incorporation in a chain saw. More specifically, the invention relates to a sprocket assembly for a chain saw drive mechanism which transmits the drive of the power head of the saw to its cutting or saw chain.

A chain saw is typically provided with a power head and a sprocket drive mechanism for engaging and driving a loop of saw chain around a guide bar. A particular make and model of a chain saw power head is typically of a standard design intended to adapt to a variety of saw chain types and sizes. Similarly, each of the various types and sizes of saw chain, including interconnected side links and centre links having depending drive tangs, is of a standard design intended to adapt to a variety of chain saw power heads.

The components that provide for the adaptation of different saw chain types and sizes to different chain saw power head makes and models are the sprocket and sprocket adapter, that is, the sprocket assembly. The sprocket has radially projected teeth for mating to a specific saw chain. The teeth engage the tangs of the saw chain for driving the saw chain around the guide bar. The type of sprocket contemplated herein is the rim sprocket which also includes circular side walls or rims that, together with the teeth, form pockets that confine the drive tangs. The rims of the sprocket also support the side links of the saw chain and this support determines the depth at which the centre link drive tangs project down into the pockets. A centre opening in the sprocket is provided with grooves for receiving splines of the adapter which in turn is fitted to the drive shaft of the power head.

The sprocket adapter thus includes a shaft with external splines that fit the grooves in the sprocket opening. Typically each spline on the adapter shaft coincides with a groove in the sprocket which is centered on a tooth of the sprocket, for example, there may be seven splines for seven sprocket teeth. The tangs on the chain are projected inwardly toward the adapter shaft but between the splines to maximize the effective pocket depth. An adapter cup is fixed to the shaft and is sized to fit a clutch mechanism of a specific type of chain saw. It is through the clutch mechanism that the adapter cup and shaft, and ultimately the sprocket and saw chain, are driven. The sprocket and adapter are of little consequence in terms of either weight or cost, as compared to the power head and saw chain, but they are critical to the function of the chain saw. Unless a proper fit is provided to both the power head and the saw chain, the chain saw will not operate properly.

The present invention is concerned with the relative sizing of the sprocket and adapter to each other and to the saw chain. The problem will be discussed herein generally in relation to a seven tooth sprocket for a .83 cm. (.325 inch) pitch saw chain, a common saw chain size.

The .83 cm. (.325 inch) pitch spacing of the chain and the seven teeth of the sprocket together dictate the optimum outer circumference of the sprocket, that is, the distance around the circular outer edges of the rims on which the side links of the chain are supported. The circumference of the sprocket in turn dictates the rim diameter. The pocket depth radially inwardly of the rim must accommodate the length of the drive tang extended inwardly from the side links. This pocket depth is determined by the adapter configuration to which the sprocket is mounted.

The conventional adapter has a portion between adjacent splines forming the bottom of the pockets that is radiused and is at a depth (the spacing from the rim's outer edge) less than that necessary to fully receive the tangs of the saw chain. This restriction imposed by the adapter configuration generated the requirement for increasing the rim diameter to shift the side links and thus the drive tangs radially outwardly on the sprocket. This, in turn, created a slight misfit as between the saw chain and the sprocket teeth and caused undue wearing of the sprocket and/or adapter. Such wearing has heretofore been tolerated as the only acceptable solution to this interference problem.

It is a further limitation of the conventional adapter that the entire driving force from the shaft to the sprocket is conveyed by the engagement of the splines in the grooves, because the surface areas between the splines were provided by circular cylindrical portions having an axis on the turning axis of the shaft. The severe intermittent impact applied to the splines during chain saw cutting causes rapid wearing and eventual breakage of the splines.

The invention of EP-A-0 333 460 modifies the configuration of the adapter shaft so that the previously curved portion or area between the splines are flattened. The flat surfaces, as compared with the curved surfaces, provide for a slight deepening of the pocket which thereby enables the rim diameter to be correspondingly decreased. The inner diameter of the hollow adapter shaft must fit around the circular drive shaft of the power head and is therefore maintained circular. The resulting thinning of the adapter between the splines (and thus between the sprocket teeth when assembled) does not unduly weaken the adapter, because it has been determined that the greatest stress and occasion of most frequent breakage of the adapter shafts is at the spline root.

The flat landings of pocket bottoms between the splines, moreover provide an additional advantage, because the sprocket configuration can be mated to the adapter configuration, and the engaging flat surfaces of the adapter shaft and the sprocket assist in transmitting the load from the drive shaft.

In accordance with the present invention, one or both of these advantages are achieved by the use of engageable configurations, preferably identical, on the shaft and the sprocket with other cross-sectional shapes.

The present invention can thus provide cross-sectional configurations that exclude circular portions centred on the common axis of the shaft and the sprocket and preferably include or consist of rectilinear portions, corresponding to flat surfaces on the shaft and in the sprocket opening, preferably extending tangentially in the manner of a regular polygon. The cross-sectional shape can however depart from a polygonal shape in various ways for example by the inclusion of curved portions, for example at the corners of the polygon.

A cross-sectional configuration in accordance with the invention can be readily arranged so that the entire periphery represent surfaces by which turning forces are applied to the sprocket from the shaft, so as to provide the clearance for the saw chain tangs needed for optimum sprocket size.

The shaft can thus be formed with a cross-sectional shape comprising angularly spaced flat portions or concave portions, preferably of part circular or near circular shape, of. which the radially innermost points correspond at least approximately to the positions of the tangs to provide for the optimum sizes of the associated sprocket.

The flat or concave portions can conveniently be joined by rounded convex or cusp-like portions which register with the sprocket teeth of the sprocket and the cross-sectional shape can be continuously curved between the radially innermost points and radially outermost points so as to have an undulating or scalloped edge.

The invention is further described below, by way of example, with reference to the accompanying drawings wherein:

Fig. 1 is a side view of a chain saw incorporating the present invention;

Fig. 2 is a sectional view of the sprocket assembly of the chain saw, taken on view line 2-2 of Fig. 1;

Fig. 3 is a sectional view of the sprocket assembly taken on view lines 3-3 of Fig. 2, but illustrating the entire sprocket assembly and a saw chain mounted on the sprocket;

Fig. 4 is a front view of the sprocket adapter of Fig. 3;

Fig. 5 is a side view of the sprocket of the sprocket assembly shown in Fig. 2; and

Fig. 6 is a front view of the sprocket of Fig. 5.

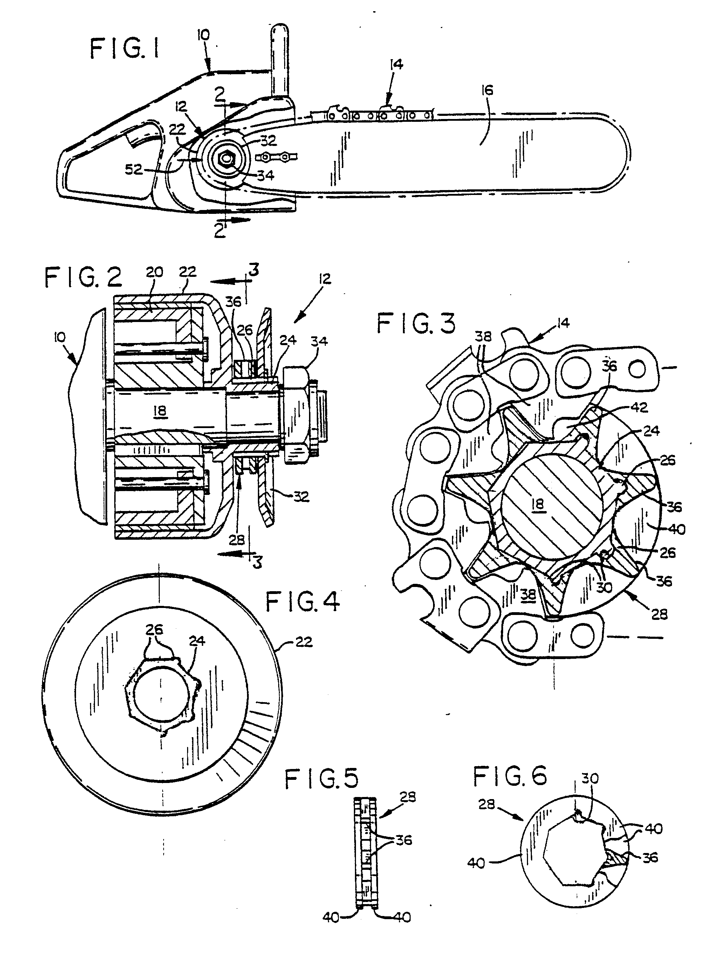

Fig. 1 of the drawings illustrates a chain saw including a power head 10 that drives a sprocket assembly 12. The sprocket assembly 12 in turn drives a loop of saw chain 14 around a guide bar 16.

The sprocket assembly 12 is more clearly illustrated in the enlarged sectional view of Fig. 2, taken on view lines 2-2 of Fig. 1. The power head 10 drives a drive shaft 18, and attached to the drive shaft is a conventional centrifugal clutch member 20 which is not shown in detail as only its function is pertinent to an understanding of the invention. As the shaft 18 is rotated and brought up to speed, the clutch member 20 is forced outwardly by centrifugal action, against the inner wall of a clutch cup 22 of the sprocket adapter. The clutch cup 22 is fixedly connected toa hollow shaft 24 having an external configuration described in detail below. The shaft 24 is loosely mounted on the shaft 18 of the power head so that it may rotate on and relative to this shaft.

A sprocket 28 has an internal configuration shaped so that the sprocket can slide axially onto the shaft 24 to engage the external configuration of the shaft, whereby the sprocket is rotated with rotation of the clutch cup 22. The remainder of the clutch assembly comprises a backing plate 32 and a nut 34 that holds the entire sprocket assembly on shaft 18.

The above features as generally described are all common to existing chain saws. The invention concerns the interconnection between the hollow adapter shaft 24 and sprocket 28 which is described below with reference to Figs. 3, 4 and 6.

The diameter of the sprocket 28 has to be matched to the pitch of the saw chain, that is, a distance spanning three adjacent rivets should divide evenly into the circumference of the sprocket. This circumference is preferably quite precise in order for the equally-spaced sprocket teeth 36 to co-operatively and simultaneously engage several saw chain drive tangs 38. It was previously necessary to slightly enlarge the diameter of the sprocket rim 40 to prevent bottoming of the drive tangs 38 on the adapter shaft 24. This increase in diameter moved the tangs 38 slightly out of the pocket 42 formed by the sprocket teeth 36 and rims 40, and solved the problem of bottoming of the tangs. However, it also caused a slight mismatch between the teeth 36 and the tangs 38, resulting in interference and undue wear.

It is moreover desirable to maximize the engagement areas by which turning forces are applied to the sprocket 28 by the adapter shaft 24 and to distribute such areas so as to limit or avoid the kind of impact and consequential wear and eventual breakage encountered with a groove and spline connection.

In accordance with the present invention, the external configuration of the shaft 24 and the internal configuration of the sprocket 28 have matching cross-sections providing driving engagement over at least a major part of the periphery of the cross-section. As shown at the left hand side of Fig. 4, the cross-sectional shape of the shaft 24 has a polygonal, specifically a heptagonal, shape and the shaft consequently consists entirely of flat surfaces. As shown on the right hand sideof Figure 4, the shaft cross-section alternatively comprises seven equiangularly spaced rounded, convex, or cusp portions 26 of outermost radial extent which are joined by tangentially extending rectilinear portions which provide flat surfaces between the rounded ridges providing in cross-section the portions 26. Similarly, as appears from the left hand side of Fig. 6, the cross-sectional shape of the central opening of the sprocket 28 is similarly a regular heptagon or comprises seven equiangularly spaced cusp portions 30 of centermost radial extent again joined by flat portions. Each apex of the heptagon, or each portion 30 coincides angularly with a respective one of the sprocket teeth 36, as shown to the right of Fig. 6.

The configurations are such that the sprocket 28 can slide axially into the shaft 24 and is then engaged with the shaft substantially without relative angular movement.

Because of the cross-sectional shapes of the shaft 24 and the sprocket 28, the turning forces from the power head 10 are applied by the shaft to the sprocket over a considerable engagement area. This allows the portions of minimum radial thickness to be dimensioned so that the pockets between the teeth 36 within which the tangs 38 are received can be of sufficient depth to avoid bottoming whilst the diameters of the rim 40 are sufficiently small for elimination of the misfit between the saw chain and the teeth occurring on the sprocket assemblies of the prior art.

As will be evident, the invention can be variously embodied otherwise than in accordance with the illustrated embodiment. The rounded cusp portions 30 of the cross-sections shown in Figures 3, 4 or 6 can for example be joined by curved or rounded concave portions so that the cross-sections as a whole have a continuously curved undulating or scalloped shape.

## Claims

1. A sprocket assembly comprising a sprocket having a plurality of equidistantly spaced sprocket teeth and a centre opening for receiving a drive shaft, the opening and the shaft having cross-sectional configurations co-operating to transmit turning forces between the shaft and the sprocket, characterized in that the cross-sectional configurations include at least major portions capable of transmitting the turning forces.

2. A sprocket assembly as claimed in claim 1 wherein the cross-sectional configuration of at least one of the opening and the shaft comprises radially outermost portions of radially outwardly curved or rounded form.

3. A sprocket assembly as claimed in claim 1 or 2 wherein the cross-sectional configuration of at least one of the opening and the shaft comprises radially innermost portions of flat or radially inwardly curved or rounded form.

4. A sprocket assembly as claimed in claim 1, 2, 3 or 4 wherein the entire cross-sectional configuration of at least one of the opening and the shaft is curved.

5. A sprocket assembly as claimed in claim 1 wherein the cross-sectional configuration of at least one of the shafts the sprocket comprises a regular polygon.

6. A sprocket assembly as claimed in any preceding claim wherein the radially innermost points of the cross-sectional configuration of the sprocket opening coincide angularly with pockets between the sprocket teeth shaped to receive the drive tangs of a saw chain.

7. A sprocket assembly as claimed in any preceding claim wherein the radially outermost points of the cross-sectional configuration of the sprocket opening coincide angularly with the sprocket teeth.

8. A sprocket assembly as cliamed in any preceding claim wherein the cross-sectional configurations of the opening and the shaft are alike and such as to fit closely together.

9. A sprocket assembly as claimed in any preceding claim wherein the sprocket has two rims between which the sprocket teeth are confined to define therewith open-bottom pockets and wherein the cross-sectional configuration is provided by the rims.

10. A sprocket assembly comprising an adapter shaft having a shaft with a configured exterior and a rim sprocket having a central opening configured to mate with the configured exterior of the adapter shaft to be rotatably driven thereby to drive a saw chain entrained on the rim sprocket, the adapter shaft exterior configuration having a plurality of projections spaced symmetrically around the shaft periphery and having similar radial dimensions measured from the axis of rotation of the shaft, the projections forming the outermost radial positions of the configuration, commonly located exterior positions between each adjacent pair of projections forming the innermost radial positions of the configuration, and driving surfaces between the innermost positions and the following outermost projections in the shaft rotational direction, the driving surfaces each having continuously increasing radii from the innermost position to the following outermost projection and extending at least half the distance between the respective projections, and the rim sprocket central opening being configured to define driven surfaces of the shaft configuration whereby the rotative driving force of the shaft driving surfaces is distributed across the rim sprocket driven surfaces.

11. A sprocket assembly as claimed in claim 10 wherein the innermost position of the shaft configuration is positioned at the mid-point between the projections.

FIG.1

FIG.2

FIG.3

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-2 634 991 (W.J. STEVENS) * Column 2, lines 3-18; column 4, lines 19-25; figures 1,4 * | 1-5,8 | F 16 D 1/06 F 16 H 7/20 B 27 B 17/08 |
| Y | | 6,7,9, 10 | |
| Y | US-A-3 144 890 (F.T. IRGENS) * The whole document * | 6,7,9, 10 | |
| X | US-A-4 072 062 (R.W. MORLING) * Column 5, lines 35-36; figures 3,4 * | 1,3,5 | |
| A | US-A-2 912 021 (D.E. GOMMEL) * Column 1, lines 63-71; figures 2-4 * | 1-10 | |
| A | US-A-3 584 667 (B.F. REILAND) * Abstract; figures 1,2,27 * | 1-10 | |

TECHNICAL FIELDS SEARCHED (Int. Cl.5)

B 27 B
F 16 D

The present search report has been drawn up for all claims

| Place of search | Date of completion of the search | Examiner |
|---|---|---|
| THE HAGUE | 17-05-1990 | MOET H.J.K. |